# EUROPEAN PATENT APPLICATION

(11) **EP 1 125 887 A2**
(43) Date of publication of application: **22.08.2001**
(21) Application number: 01101415.6
(22) Date of filing: 23.01.2001
(51) Int. Cl.: B67D 1/12, A23L 2/00

(54) **Syrup measuring device for machines for the extemporary preparation of drinks**

(30) Priority: 16.02.2000 IT GE000018
(71) Applicant: GBG- Ali S.p.A., 40011 Anzola Emilia (BO) (IT)
(72) Inventor: Rinaldi, Roberto, 40013 Castelmaggiore (BO) (IT)
(74) Representative: Porsia, Attilio, Dr.

(57) **Abstract**

Device for the measuring and preparation of instant drinks starting from a dose of a concentrated liquid which is mixed with a dose of a diluent so obtaining a diluted drink ready to be supplied for the use. It includes a tank containing a concentrated liquid and a tub whose bottom is provided with an opening for the connection to a time type valve mean connected with a device for the mixing of said doses of concentrated liquid with a diluent liquid. Said tank is connected with said tub through a pipe connected with the intake side of a pump whose delivery side reaches said tub. Said pipe is connected to the pump intake side through the interposition between two parts of the pipe made from metal of a pipe section of non-conductive material, being to the two ends of said metal pipe connected the terminals of a probe fit to measure the electro-conductivity of the liquid in the insulating pipe part, so to provide for a warning signal when in said part is occurring a change in said conductivity due to the lack of syrup between said terminals. The device, moreover, includes an automatic washing system and a series of signals for guiding the user.

## Description

The present invention refers to a device for the measuring and preparation of instant drinks starting from a dose of a concentrated liquid which is mixed with a dose of a diluent (normally water), so obtaining a diluted drink ready to be supplied for the use.

Machines area know which use, in the phase of supplying of the dilutable substance dose, a pumping group taking from a tank said substance and sending it to the zone where it will be mixed with the diluent liquid.

One of main disadvantages of said known machines is the impossibility, using pumping groups, to reply each time exactly the dose of dilutable substance supplied to the mixer.

A further disadvantage of said machines is the fact that in case the container of the dilutable substance (normally syrup) is inadvertently emptied, the lack of syrup within the pump brings to the drying of the syrup traces in the pump itself, which take it out of order blocking its mechanisms.

It is thus the main aim of the present invention to provide for a device for the measuring and preparation of instant drinks starting from a dose of a concentrated liquid which is mixed with a dose of a diluent, to obtain a diluted drink ready to be supplied for the use, which avoids the disadvantages of the known devices, and which is easy to clean through an automatic washing cycle.

According to one of its main feature, the device of the present invention includes a dilutable substances containing tank and a tub upwardly open and with predetermined volume whose bottom is provided with an opening for the connection with a time type valve mean that reaches a device for the mixing of said doses with a diluent liquid, being said tank connected with said tub through a pipe communicating by one side with the intake side and by the other with the delivery side of a pump, and characterized in that a part of said pipe connected to intake side of said pump is made from electricity non-conductive material interposed between two parts of metal pipe, being to the two ends of said metal pipe parts connected the two terminals of a probe fit to measure the electro-conductivity of the liquid in the insulating pipe part, so to provide for a warning signal when in said part is occurring a break in said conductivity due to the lack of syrup.

According to a further feature of the present invention, the said tub co-operates with a level sensor which controls the working of the syrup supplying pump every time the level in the tub sinks below a provided value, stopping said working every time the level goes above the same value.

According to a further feature of the present invention, during the machine washing phase, it is possible to replace the syrup container with a tank containing a washing substance, so to automatically perform a complete washing of all the parts of the machine.

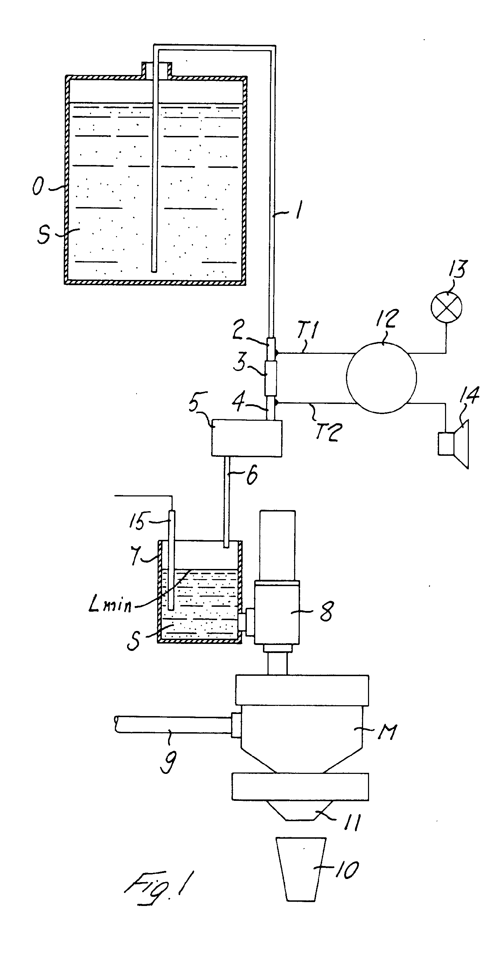

Further aims and advantages of the present invention will be better cleared through the following description of a preferred embodiment form of the same shown as a not limitative example in the enclosed drawing, showing schematically in the only figure 1 a partially sectioned view of the device according to the invention.

With reference to the drawing, with O is shown a tank for the dilutable substance, in particular for a syrup S. With 1 is shown a probe taking with one end in the tank O, being its other end connected, through a connection tubular element 2 of metal material to a tubular element 3 of electricity insulating material, in particular of plastic material, and to a metallic tubular element 4 connected to the intake of a pump 5 whose delivery 6 discharges the syrup S into a tub 7, whose bottom is connected to a time electro-valve 8 controlling the downflow of the syrup S into the mixer M, into which it gets also a refreshed water dose through the pipe 9. From the mixer M the produced diluted drink is supplied into a suitable container, for example the glass 10 through the supplying spout 11.

According to a main feature of the present invention, to one end of the metal pipe parts 2 and 4 are connected the two terminals T1 and T2 of a probe 12 fit to measure the electricity conductivity of the liquid in the part 3 of insulating pipe, so to provide for a warning signal, which can be either light 13 or sound 14 or both, or which can also control the cutting of the current supplying to the pump 5, in case in the said part 3 occurs an alteration or interruption of said conductivity, due to the lack of syrup within the pipe part 3.

Thanks to said feature, the "syrup lack" signal is started, which requires either the restoring of the syrup or a complete washing cycle to avoid that the syrup traces, unintentionally let drying within the pump, could block it. If one of the above mentioned conditions doesn't occur before the provided time limit, the machine sets to block position with request of "technical intervention" to restore at the best the normal operating condition.

According to a further feature of the present invention, in the tub 7 is inserted a probe 15 controlling the minimum level Lₘᵢₙ of the syrup S in the tub 7, starting or stopping the working of the pump 5 any time the syrup in the tub 7 sinks below the minimum level Lₘᵢₙ, or respectively goes above the maximum level Lₘᵢₙ.

In this way, in the tub 7 is constantly kept a syrup S average level such to guarantee, together with the working of the time valve 8, the supplying to the mixer of syrup constant doses.

According to a further feature of the present invention, the machine according to the present invention allows an operator, even inexperienced, to perform a perfect washing cycle of the same, so to guarantee to the final customer a drink as much as possible in accordance with the hygienic standards.

To this aim it is simply requested to replace the syrup container O with a tank containing a cleasing liquid, and place a suitable empty container under the drink outlet pipe 11 to get the washing liquid. After the starting through a suitable control of the washing cycle, a careful washing of all the parts and the pipes previously passed through by the syrup is obtained. The washing cycle is then completed by a rinse with drinking water, obtained by, replacing the container of the cleansing liquid with a drink water tank and starting up the suitable control.

After starting up of the washing cycle by pressing its push-button (not shown) and positioning the two containers the operator, will look at the automatic functioning of the machine to the total use of the cleansing liquid. In case the quantity both of cleansing liquid and rinsing water should prove to be lower than a defined minimum quantity, the machines stops its functions allowing just the restart of the washing cycle. In this phase, the pump 5, controlled by the probe 15, fills the tub 7 to a level higher than the maximum one reached by the syrup so to eliminate any trace. When this first washing phase is completed, the machine stops and remains waiting for the starting up of the rinsing cycle. In this second phase, the pump 5, always controlled by the probe 15, fills the tub 7 to a level higher than the one reached by the cleansing liquid, so to eliminate any trace.

Moreover, the device through suitable signals co-ordinates the work of the operator even for the washing phase prompting when it is time to perform the washing cycle and setting to condition of "functions block" with request of "technical intervention" when to the warning signals it doesn't follow any washing cycle within a provided maximum time.

## Claims

1. A device for the measuring and preparation of instant drinks starting from a dose of a concentrated liquid (S) which is mixed with a dose of a diluent so obtaining a diluted drink ready to be supplied for the use, includes a tank (O) to contain a concentrated liquid (S) and a tub (7) whose bottom is provided with an opening for the connection to a time type valve mean (8) connected with a device (M) for the mixing of said doses of concentrated liquid (S) with a diluent liquid, being said tank (O) connected with said tub (7) through a pipe (1; 2; 3; 4) communicating with the intake side of a pump (5) whose delivery side (6) reaches said tub (7), characterized in that the parts (2; 4) of said pipe (1; 2; 3; 4) are of an electricity conductive material, being the pipe part (2) connected to the intake side of said pump (5) and being between said pipe parts (2) and (4) of electricity conductive material interposed a pipe part (3) of electricity non-conductive material, being to the two ends of said conductive pipe parts (2; 4) connected the terminals (T1, T2) of a probe (12) fit to measure the electrical conductivity of said concentrated liquid (S) in the pipe part (3), so to provide for a warning signal when in said pipe part is occurring a change in said conductivity, due to the lack of concentrated liquid (S) between said terminals (T1, T2).

2. A Device according to claim 1, characterized in that it further includes an electronic system guiding the user through the different working phases and, according to provided times, asks for suitable washing cycles, being provided that in case said washing cycles don't occur in provided time intervals, the device sets to condition of "function blocks" and "technical intervention" to correctly restore the normal functioning.

3. A device according to any one of the preceding claims, where said tub (7) co-operates with a level sensor (15) controlling the starting up of the supplying pump (5) of said concentrated liquid (S) any time the level in the tub (7) sinks below a certain minimum value (Lₘᵢₙ), stopping said pump any time the level goes above said minimum level value.

4. A device according to any one of the preceding claim, characterized in that during the machine washing cycle, it is possible to replace the syrup container (O) with a tank containing first a cleansing substance and then rinsing water, so to automatically perform a complete washing of all the parts of the machine previously passed through by the syrup.

5. A device according to claim 1, where said concentrated liquid (S) is a syrup and said diluent liquid is water.

6. A device according to claim 1, where said pipe parts of electricity conductive material (2; 4) are metal pipes.

7. A device according to claim 1, where said pipe part (3) of electricity non-conductive material is a pipe part of plastic material.

8. A device according to claim 4, where during the washing phases the levels in the tub respectively of the washing solution and rinsing water are greater than the level previously provided.
